# FASCICULE DE BREVET EUROPEEN

(11) **EP 0 577 492 B1**
(45) Date de publication et mention de la délivrance du brevet: **28.08.1996**
(21) Numéro de dépôt: 93401662.7
(22) Date de dépôt: 28.06.1993
(51) Int. Cl.: F16L 33/00, F16L 31/00

(54) **Procédé de raccordement de tubes ou tuyaux, raccords et dispositifs analoques obtenus par sa mise en oeuvre**
Verfahren und Vorrichtung zum Verbinden von Rohren sowie Rohrverbindung
Method and apparatus for connecting pipes and branching device

(30) Priorité: 03.07.1992 FR 9208222
(43) Date de publication de la demande: 05.01.1994
(73) Titulaire: HUTCHINSON, F-75008 Paris (FR)
(72) Inventeur: Andre, Maxime, F-45220 St. Germain des Prés (FR)
(74) Mandataire: Orès, Bernard

(56) Documents cités:
- EP-A- 0 243 216
- DE-A- 3 400 638
- FR-A- 2 271 487

## Description

L'invention concerne un procédé de raccordement de tubes ou tuyaux, ainsi que les raccords et dispositifs analogues obtenus par sa mise en oeuvre.

Elle trouve application pour la fabrication de dispositifs comme des raccords de dérivation de tubes ou tuyaux souples, en particulier à base de caoutchouc, de plastomères ou de matières thermoplastiques élastomères, ainsi que, dans certaines conditions de mise en oeuvre, pour la fabrication de tels raccords de tubes ou tuyaux quelque peu plus rigides, mais aussi pour la fabrication de dispositifs de fixation de tels tubes ou tuyaux sur des embouts, ou encore pour la fabrication de branchements, piquages ou faisceaux de canalisations en ces matières, sans qu'aucun caractère limitatif ne soit attaché à cette énumération, ni aux domaines où l'invention peut être mise en oeuvre et où le raccordement entre eux de tubes ou tuyaux peut s'avérer nécessaire comme, par exemple, dans l'industrie du bâtiment, l'économie domestique, ou le vaste domaine de l'industrie des transports, en particulier celui de l'automobile.

Dans ce dernier domaine, les tubes ou tuyaux souples à base de caoutchouc, en particulier, mais non exclusivement, ceux interposés entre le moteur et le radiateur pour constituer le circuit de refroidissement du moteur, de même que les faisceaux d'acheminement de différents fluides (hydrauliques ou pneumatiques comme le liquide de frein, le carburant, etc...) comportent fréquemment des branchements qui, soit établissent des circuits secondaires à partir d'un circuit principal, comme des dérivations, des raccords, etc..., soit sont destinés à permettre l'exécution de fonctions de commande et/ou de contrôle comme des mesures de débit ou de température à l'aide de sondes, de piquages ou autres. Ces branchements, qui seront désignés ci-après dans leur ensemble par l'expression très générale de "raccords ou analogues", ont longtemps été fabriqués par emmanchement des tubes ou tuyaux à raccorder sur un insert de forme appropriée, puis fixation desdits tubes ou tuyaux sur l'insert par des colliers de serrage de types les plus variés. A cette technique ancienne se sont progressivement substituées des techniques de sertissage, comme décrit dans DE-3 729 057, ou des techniques de surmoulage de caoutchouc ou de matière plastique explicitées dans FR-A-2 549 196 ou FR-A-2 610 073, par exemple. Si les techniques mentionnées en dernier lieu donnent satisfaction et permettent l'obtention de dispositifs largement utilisés, elles se révèlent parfois, cependant, trop coûteuses et/ou difficiles à mettre en oeuvre pour certaines configurations, dans le cas de la technique du sertissage, ou nécessitent des temps de fabrication relativement importants, -dans le cas de surmoulage en caoutchouc-, ou font appel à des techniques de fabrication qui peuvent être compliquées dans le cas de surmoulage en matières plastiques usuelles.

C'est, par conséquent, un but général de l'invention de fournir un procédé de raccordement de tubes ou tuyaux qui soit d'une grande facilité de mise en oeuvre tout en garantissant la qualité des raccords et dispositifs obtenus en particulier en ce qui concerne l'absence de fuites du fluide circulant dans lesdits tubes ou tuyaux, notamment lorsque ce fluide est sous pression.

C'est, aussi, un but de l'invention de fournir un tel procédé permettant d'obtenir des raccords ou analogues de formes complexes, quels que soient les tubes ou tuyaux constitutifs desdits raccords ou analogues, et cela à un faible coût, nonobstant la complexité de ces dispositifs.

C'est, encore, un but de l'invention de fournir un tel procédé dont la mise en oeuvre n'exige pas de machines de fabrication particulières, d'une part, et qui, d'autre part, puisse être exécuté avec des cycles de fabrication courts et, partant, favorables à une productivité élevée.

C'est, également, un but de l'invention de fournir un tel procédé permettant d'obtenir directement des raccords ou dispositifs analogues d'un aspect satisfaisant, ce qui en accroît d'autant l'intérêt pour les utilisateurs.

Ces buts et d'autres encore sont atteints dans un procédé de raccordement de tubes ou tuyaux, en particulier à base de caoutchouc, de plastomères ou de thermoplastiques élastomères suivant lequel lesdits tubes ou tuyaux emmanchés sur un insert y sont maintenus à étanchéité par moulage d'une matière plastique au moins au droit des zones où lesdits tubes ou tuyaux coopèrent avec ledit insert, par le fait que ladite matière plastique est moulée de façon à former un matériau cellulaire dont l'expansion est conduite de manière telle qu'il en résulte sur lesdits tubes ou tuyaux des efforts de compression qui assurent l'accrochage et l'étanchéité desdits tubes ou tuyaux sur l'insert.

Un tel procédé permet d'utiliser, pour le moulage de la matière plastique, -avantageusement réalisé par les techniques d'injection-, une presse à injection et des outillages, en particulier des moules, habituellement mis en oeuvre pour la fabrication de matériaux cellulaires.

Le procédé, qui s'applique à des tubes ou tuyaux armés ou non armés, revêtus ou non d'une gaine textile externe, permet de conformer les raccords ou analogues en fonction des desiderata de la pratique, par exemple pour ménager à la fois des dérivations, branchements ou piquages sur un ou une pluralité de tubes ou tuyaux tout en réunissant lesdits tubes ou tuyaux par des pontages afin d'obtenir un ensemble, -comme un faisceau de tubes ou tuyaux-, propre à être manipulé en tant qu'ensemble unitaire.

Le procédé permet également de réunir, à l'endroit du moulage de la matière plastique, des tubes ou tuyaux de grande longueur qui ne pourraient pas ou ne pourraient que difficilement être fabriqués par les techniques de surmoulage de caoutchouc en raison, par exemple, du dimensionnement des autoclaves de vulcanisation.

Le procédé permet aussi d'obtenir, en une seule et même opération et en même temps que des raccords proprement dits de tubes ou tuyaux, le maintien par rapport auxdits tubes ou tuyaux de pièces comme des sondes de pression, de température, de mesure de débit, des moyens de purge, etc...

Dans un premier mode d'exécution, le procédé selon l'invention prévoit de former le matériau cellulaire en incorporant un gaz inerte ou un liquide à bas point d'ébullition à la matière polymérique injectée.

Dans un tel mode d'exécution, le mélange de matière plastique et de gaz inerte ou de liquide à bas point d'ébullition est amené par l'intermédiaire d'un dispositif à vis transporteuse dans un accumulateur où le mélange est maintenu sous pression pour s'opposer à une expansion prématurée puis, après qu'un obturateur de retenue ait été rapidement ouvert, un piston mobile dans l'accumulateur injecte à grande vitesse le mélange dans le moule ; après remplissage de celui-ci, un clapet est refermé et la phase d'expansion se développe dans le moule, tandis que l'accumulateur est à nouveau rempli pour un cycle d'injection ultérieur.

Dans un autre mode d'exécution, l'expansion de la matière plastique et la formation du matériau cellulaire résultent de la décomposition, à la température de moulage, d'un agent gonflant ou agent porogène chimique. Ce dernier est choisi en fonction de la matière plastique injectée à la fois pour éviter des interactions chimiques avec ladite matière, pour tenir compte des températures de mise en oeuvre, des réactions possibles avec le matériau constitutif du moule, de la nature des produits gazeux, etc...

Dans une réalisation avantageuse, et pour une matière plastique injectée du type des polyamides, ledit agent gonflant est choisi dans la famille des azodicarbonamides ou dans celle des tétrazoles et est ajouté à la matière plastique au cours d'une opération préliminaire ou pendant le processus d'injection.

Ce mode d'exécution faisant appel à un agent gonflant, de mise en oeuvre plus simple que celui faisant appel à un gaz inerte ou à un liquide à bas boint point d'ébullition et qui est conduit à l'aide de machines d'injection usuelles est, par conséquent, préféré. Il permet, en outre, de mieux controler la régularité et l'uniformité des produits obtenus, en particulier en ce qui concerne la densité du matériau cellulaire, le gradient de densité entre la peau et le coeur dudit matériau, la dimension et la répartition des cellules, tout en conférant au dispositif fabriqué un état de surface satisfaisant, en particulier si l'on opère à des pressions moyennes ou élevées lors de l'injection.

Un raccord de tubes ou tuyaux, notamment en caoutchouc, mais aussi en plastomères ou thermoplastiques élastomères ou un dispositif analogue comprenant au moins un insert sur lequel sont emmanchés les tubes ou tuyaux et un moulage de matière plastique qui enferme à étanchéité au moins les parties desdits tubes ou tuyaux qui coopèrent avec l'insert comprend, selon l'invention, une matière plastique sous forme d'un matériau cellulaire, expansé, rigide, qui exerce sur lesdits tubes ou tuyaux des efforts de compression assurant l'étanchéité et l'accrochage desdits tubes ou tuyaux sur l'insert.

Le matériau cellulaire, du type des mousses rigides à cellules fermées, a une densité globale qui peut être comprise entre environ le tiers de la densité de la matière plastique mise en oeuvre pure et cette même densité de la matière plastique pure diminuée de quelques pour cent.

Un raccord ou dispositif analogue selon l'invention bénéficie ainsi, en raison de la présence du matériau cellulaire, d'une conductivité thermique relativement faible, d'une bonne résistance aux chocs bien absorbés par la structure cellulaire qui réduit la diffusion d'éventuelles fissures, d'une économie de matière et d'un rapport rigidité/poids plus élevé que celui des dispositifs antérieurs connus. Pour accroître les caractéristiques mécaniques des raccords ou dispositifs analogues selon l'invention, par exemple celles de rigidité, de dureté, de résistance au fluage et à la traction, ou de déformation sous charge, tout en améliorant la structure cellulaire, d'une part, et en réduisant les cycles de moulage, d'autre part, l'invention prévoit de renforcer le matériau cellulaire par des charges, avantageusement des fibres ou des billes de verre.

Lorsque des charges sont mises en oeuvre, elles sont présentes dans une proportion comprise entre 5 et 95 % en poids de la matière plastique injectée.

Dans une réalisation préférée, les charges représentent de 5 à 25 % en poids de la matière plastique injectée.

Selon un autre avantage de l'invention, le moulage par injection de la matière plastique est conduit de manière que les raccords ou dispositifs analogues présentent une peau de surface dont la profondeur des aspérités est de l'ordre de celle obtenue lors du moulage par injection de matières plastiques compactes, c'est-à-dire de l'ordre de quelques microns.

L'invention sera bien comprise par la description qui suit, faite à titre d'exemple et en référence au dessin annexé dans lequel :
- les figures 1 à 3 illustrent le procédé de raccordement selon l'invention et montrent un raccord obtenu par sa mise en oeuvre ;
- les figures 4 à 8 montrent d'autres formes de raccords obtenus à l'aide du procédé selon l'invention.

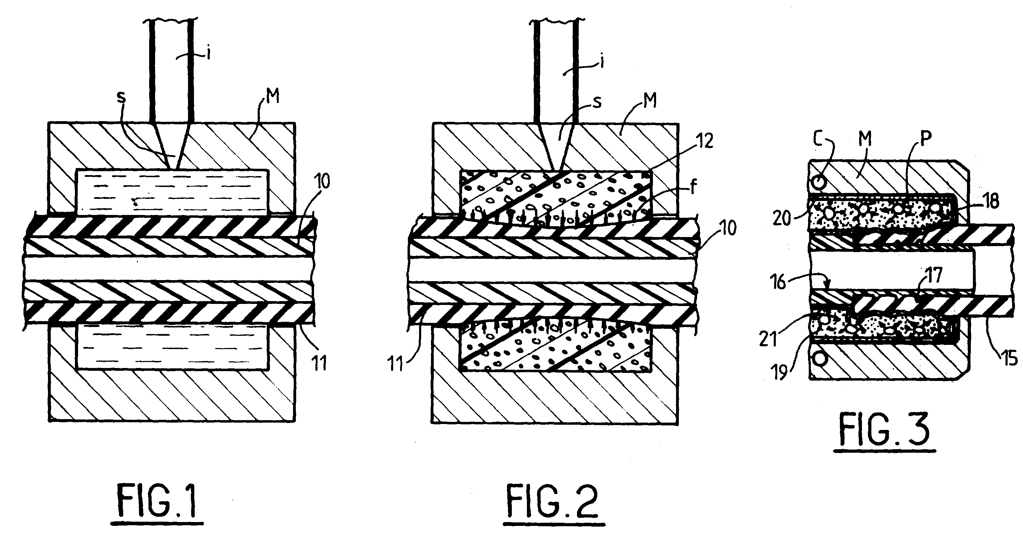

On se réfère d'abord aux figures 1 à 3 qui illustrent schématiquement le procédé selon l'invention de raccordement d'un tube ou tuyau en caoutchouc, plastomère ou thermoplastique élastomère sur un embout. Comme montré sur les figures 1 et 2, le procédé de raccordement selon l'invention propose, après avoir emmanché sur un insert 10 un tube ou tuyau 11, de fixer ledit tube ou tuyau sur l'insert, d'une part, et d'assurer l'étanchéité de cette fixation, d'autre part, à l'aide d'un matériau cellulaire 12 moulé sur le tube ou tuyau 11 de manière telle qu'il en résulte sur ledit tube ou tuyau des efforts de compression (schématisés par les flèches f de la figure 2) qui assurent ledit accrochage et ladite étanchéité. Pour ce faire, l'invention prévoit de placer l'insert 10 et le tube ou tuyau 11 dans un moule M (muni d'au moins un dispositif i d'injection de matière plastique qui débouche dans le moule par un seuil d'injection s et de trous évents) puis d'injecter dans ledit moule une matière polymérique qui y est transformée, in situ, en matériau cellulaire.

Dans un premier mode d'exécution du procédé, on incorpore à la matière plastique injectée un gaz inerte comme de l'azote, du fréon ou un liquide à bas point d'ébullition comme -un hydrocarbure chloré, le mélange de matière plastique et de gaz inerte étant maintenu sous pression jusqu'à son injection dans le moule M où s'opère l'expansion en même temps que le refroidissement de la matière moulée. Cette dernière, emprisonnée dans le moule, "gonfle" en direction du tube ou tuyau 11, pour former le matériau cellulaire 12, figure 2, en développant des efforts de compression suffisants pour assurer la fixation et l'étanchéité du tube ou tuyau sur l'insert.

Dans un second mode d'exécution, qui conduit au même résultat, l'expansion de la matière plastique et la formation du matériau cellulaire 12 résultent de la décomposition à la température de moulage d'un agent gonflant ou agent porogène chimique. Ce dernier est généralement mélangé à la matière plastique injectée au cours d'une opération préliminaire, ou pendant le processus d'injection ou encore par compoundage. Dans le premier cas, le mélange de l'agent gonflant et de la matière plastique peut être conduit à sec, ou par mélange au tonneau avec un agent adhésif, tandis qu'il est introduit à l'aide de doseurs et de mélangeurs automatiques montés sur la presse à injection dans le second cas ou est, dans le troisième cas, introduit dans la matière plastique en fusion laquelle, après homogénéisation, est extrudée puis granulée pour servir de matière première à la presse à injection alimentant le dispositif i.

Quelle que soit la technique mise en oeuvre, l'exécution du procédé par décomposition d'un agent gonflant implique que l'on injecte dans le moule une quantité de matière inférieure ou au plus égale au volume de l'empreinte, d'une part, et que les seuils d'injection s soient aussi petits et aussi près que possible de l'empreinte de moulage, d'autre part, contrairement au processus d'injection de matière plastique compacte. Complémentairement, l'injection est conduite de manière que la matière plastique fondue et transportée par la vis de plastification reste sous pression, pour éviter une expansion prématurée et la formation de bulles de gaz, la rétention aussi forte que possible du gaz près de la sortie de la buse d'injection étant obtenue par un apport de chaleur sur ladite buse, apport de chaleur dont l'effet de décomposition sur l'agent gonflant est contrebalançé par une augmentation de la pression.

L'injection est conduite à vitesse élevée, -et cela contrairement également aux techniques mises en oeuvre pour le moulage de matières plastiques compactes-, le temps de maintien et de refroidissement dans le moule étant choisis pour l'obtention d'une peau de surface d'aspect satisfaisant, en particulier d'une telle peau ayant une profondeur de ses aspérités de l'ordre de celle obtenue lors du moulage par injection de matière plastique usuelle, à savoir de quelques microns. A l'obtention d'une peau de matériau cellulaire de bonne qualité contribue aussi la température du moule, dans la mesure où la structure de la matière plastique dépend de sa vitesse de cristallisation qui est elle-même fonction du gradient de température qui s'établit entre le moule et la matière en fusion qui y est injectée alors que la dimension des bulles de gaz, -et donc des cellules-, est liée à la vitesse de refroidissement de la matière injectée.

Le moule M est muni de canaux C de circulation d'un fluide de régulation, figure 3, permettant de donner à sa paroi interne, p, une température qui n'est pas trop chaude, - pour favoriser la cristallisation-, et qui n'est cependant pas trop froide pour éviter que la matière injectée ne se "fige" en surface.

Etant donné que l'obtention d'un matériau cellulaire satisfaisant dépend non seulement des facteurs physiques qui viennent d'être énoncés mais, bien entendu, de la nature de l'agent gonflant porogène, ce dernier est choisi pour permettre d'obtenir un matériau cellulaire expansé, rigide, à cellules fermées, produit avec un bon rendement gazeux, sans risque d'interaction chimique de la matière polymérique et de l'agent porogène, sans dégagement de produits toxiques pour les personnels de fabrication ou corrosifs pour les moules, la température de décomposition de l'agent porogène étant en outre adaptée à celle de mise en forme de la matière polymérique injectée.

Sous réserve de satisfaire aux conditions indiquées ci-dessus, le procédé peut être mis en oeuvre avec des tubes ou tuyaux 11 de tous types, armés ou non armés, revêtus ou non d'une gaine textile externe, et avec des insert 10, eux aussi de forme et de nature variées, par exemple en métal, matière plastique armée ou non armée, ou en matière plastique chargée à l'aide de fibres ou analogues.

Dans la réalisation montrée sur la figure 3, un tube ou tuyau souple 15, par exemple en caoutchouc à base d'EPDM, de plastomère ou de matière thermoplastique élastomère est réuni à un embout 16 dont la partie d'extrémité 17 de plus faible épaisseur que celle du reste de l'embout présente sur sa surface externe des aspérités en "sapin" 18. Lorsque les dimensions relatives du diamètre interne du tube 15 et de la surface externe de la partie 17 de l'embout assurent une cohésion suffisante pour que l'ensemble du tube emmanché sur l'embout puisse être manipulé de façon unitaire, ledit ensemble est placé dans le moule M ; si la cohésion n'est pas suffisante, l'embout est garni d'un adhésif faible préalablement à l'emmanchement sur lui du tube, et l'ensemble est, comme dans le cas précédent, placé dans le moule M. Après injection de la matière polymérique additionnée d'agent gonflant, dans les conditions exposées ci-dessus, on obtient dans le moule un matériau cellulaire 19 dont la densité décroît depuis celle de sa peau 20 (au contact du moule, de l'embout 16 et du tube 15) jusqu'à son coeur 21, la fixation à étanchéité du tube ou tuyau à l'embout résultant des efforts de compression exercés par la transformation de la matière plastique injectée en ledit matériau cellulaire dont la densité peut varier d'environ le tiers de celle de la matière plastique compacte à environ cette valeur moins quelques pour cents et cela en fonction des desiderata de la pratique en ce qui concerne les caractéristiques recherchées de résistance aux chocs, de conductivité thermique, etc...

De bons résultats d'accrochage et d'étanchéité des tubes ou tuyaux souples sur l'insert étant obtenus même à de faibles densités, il peut parfois s'avérer avantageux de compenser la diminution de certaines caractéristiques mécaniques dûes à la nature cellulaire du matériau par l'adjonction de charges, en particulier de fibres et/ou de billes de verre. Ainsi, des ajouts de fibres et/ou billes de verre dans des proportions comprises entre 5 et 95 % en poids de la matière plastique injectée conduisent à des augmentations du module de flexion, de la résistance à la traction, de la température de déformation sous charge, ainsi qu'à un cycle de fabrication plus court dans la mesure où la peau des matériaux cellulaires atteint plus rapidement une rigidité suffisante lui permettant de résister aux pressions internes développées lors de l'expansion. Une proportion préférée de charge est de 5 à 25 % en poids de la matière plastique injectée.

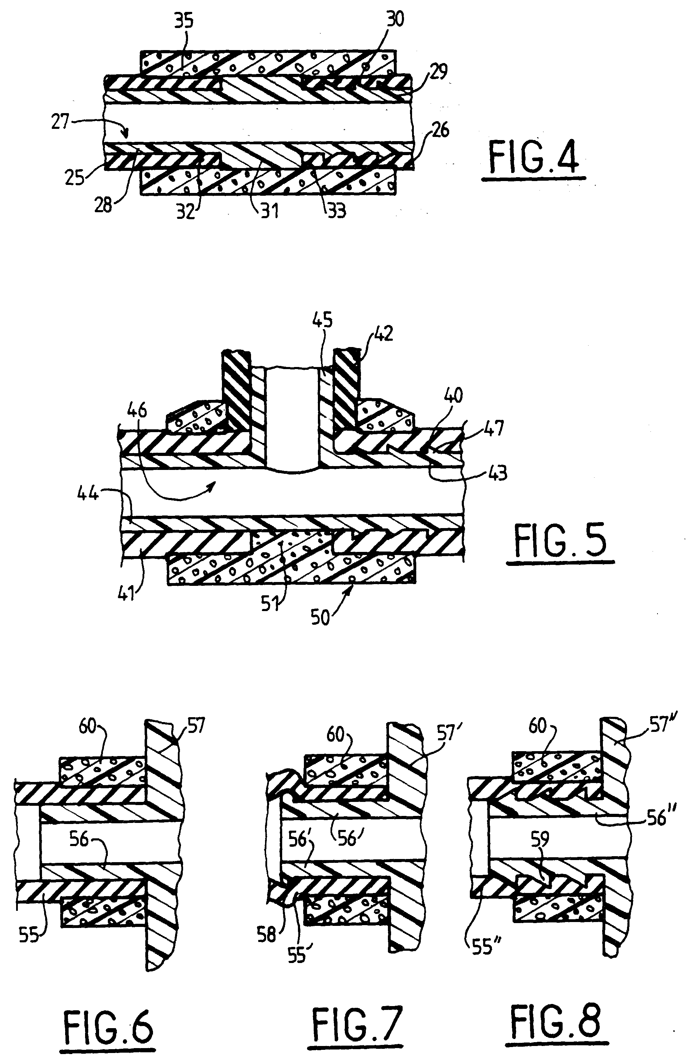

Dans la réalisation de la figure 4, l'invention est appliquée au raccordement de deux tubes ou tuyaux 25 et 26 colinéaires à l'aide d'un insert 27 constitué par un élément tubulaire dont les parties d'extrémité 28 et 29 (cette dernière étant munie d'aspérités 30) ménagent avec une zone médiane 31 des épaulements de butée 32 et 33 pour le positionnement des tubes ou tuyaux 25 et 26. Après que ces tuyaux aient été emmanchés sur l'insert 27, jusqu'à butée de leurs extrémités sur les épaulements 32 et 33, lesdits tubes sont solidarisés à étanchéité avec l'insert au moyen d'un manchon 35 en matériau cellulaire réalisé de la façon décrite ci-dessus. Le raccord ainsi obtenu présente une excellente caractéristique de résistance d'arrachement des tubes par rapport à l'insert et de résistance, à la pression interne, y compris lors de cycles de pression à impulsions préconisés par les constructeurs d'automobiles.

Dans la réalisation selon la figure 5, trois tubes ou tuyaux 40, 41 et 42 sont emmanchés sur les branches 43, 44 et 45, respectivement, d'un insert 46 en T dont la branche 43 est, avantageusement, munie d'aspérités 47 en "sapin". La solidarisation à étanchéité des tuyaux avec l'insert est obtenue à l'aide d'un manchon 50 en matériau cellulaire qui enveloppe en partie les tuyaux au droit des zones où ceux-ci coopèrent avec l'insert et qui, comme montré en 51, règne également en partie entre les extrémités des tuyaux axialement opposés 43 et 44.

Dans les réalisations selon les figures 6 à 8, un tube ou tuyau 55, 55' ou 55'' à base de caoutchouc, de plastomère ou de thermoplastique élastomère est fixé à étanchéité sur un embout 56, 56' ou 56'' en saillie sur une paroi 57, 57' ou 57'' qui peut être, par exemple, celle d'une boîte à eau d'un radiateur d'automobile ou analogue. Que l'embout soit totalement lisse et cylindrique, comme montré en 56, ou présente à son extrémité un rebord 58, comme montré sur la figure 7, ou encore des saillies "en sapin", comme montré en 59 sur la figure 8, la solidarisation à étanchéité du tube ou tuyau 55, 55', 55'' avec ledit embout est obtenue à l'aide d'un manchon de matériau cellulaire 60 dont l'expansion a été conduite de manière telle qu'il en résulte sur le tube ou tuyau 55, 55', 55'' des efforts de compression qui assurent la fixation à étanchéité du tube ou tuyau sur l'embout.

L'invention n'est pas limitée aux formes de réalisation qui viennent d'être décrites mais trouve application pour la réalisation de dispositifs comme des faisceaux de tubes, des purges, ou encore pour la mise en place dans de tels dispositifs d'organes de mesure comme des sondes de pression, de température, etc...

Elle trouve également application pour le raccordement de tubes ou tuyaux en matériau moins souple que le caoutchouc, sous réserve que soient alors observées des conditions particulières de mise en oeuvre, par exemple de géométrie ou de température, -dans ce dernier cas pour engendrer un certain ramollissement des tubes ou tuyaux à assembler à l'insert-, etc...

De bons résultats ont été obtenus par le procédé selon l'invention lorsque celui-ci est mis en oeuvre, à titre d'exemple non limitatif, bien entendu, de la façon suivante :

### Exemple 1

Trois tuyaux en polychloroprène d'un diamètre interne de 5 mm ont été raccordés sur un insert en T en polyamide 6,6 armé de 30 % de fibres de verre en emmanchant les tuyaux sur l'insert puis en moulant sur un tel ensemble un polyamide 6,6 contenant 1,3 % d'un agent gonflant du type azodicarbonamide.

Avec une température de moule de l'ordre de 80°C et une température d'injection de l'ordre de 300°C, la durée totale d'un cycle de fabrication est de l'ordre de 30 secondes.

On prélève ensuite parmi les raccords ainsi obtenus six échantillons divisés en deux groupes de trois raccords chacun, lesquels sont soumis à des essais de tenue à la pression, sur un banc d'impulsions à variation cyclique.

Après avoir soumis les échantillons à 25 000 cycles, on mesure l'effort d'arrachement nécessaire pour séparer les tuyaux de l'insert : lesdites valeurs s'étagent entre 21,1 et 25,4 daN, pour une valeur moyenne de 23,7 daN.

### Exemple 2

Des raccords en T analogues à ceux décrits en référence à l'exemple 1 mais pour des tuyaux d'un diamètre interne de 9 mm ont été réalisés à l'aide d'une matière polymérique du type polyamide 6,6 comprenant à titre de charge 30 % de fibres de verre.

La matière polymérique ainsi chargée, additionnée de 1,3 % du même agent gonflant que celui mis en oeuvre dans l'exemple 1, est ensuite injectée comme dans cet exemple.

Deux groupes de trois raccords chacun ainsi obtenus sont ensuite soumis à des essais d'arrachement, après avoir supporté chacun des contraintes de pression dynamique durant 25 000 cycles.

Les efforts d'arrachement mesurés s'étagent de 17,6 à 23,8 daN pour une valeur moyenne de 20,33 daN.

## Revendications

1. Procédé de raccordement de tubes ou tuyaux, en particulier à base de caoutchouc, de plastomères ou de thermoplastiques élastomères suivant lequel lesdits tubes ou tuyaux emmanchés sur un insert (10; 16; 27; 46; 56, 56', 56") y sont maintenus à étanchéité par moulage d'une matière plastique au moins au droit des zones où lesdits tubes ou tuyaux coopèrent avec ledit insert, ladite matière plastique étant moulée de façon à former un matériau cellulaire (12, 19 ; 35 ; 50 ; 60) dont l'expansion est conduite de manière telle qu'il en résulte sur lesdits tubes ou tuyaux (11, 15 ; 25, 26; 40, 41, 42; 55, 55', 55") des efforts de compression qui assurent l'accrochage et l'étanchéité desdits tubes ou tuyaux sur l'insert.

2. Procédé selon la revendication 1, caractérisé en ce que la densité du matériau cellulaire, qui forme une mousse rigide, à cellules fermées, est comprise entre environ le tiers de la densité de la matière plastique pure et cette même densité diminuée de quelques pour cent.

3. Procédé selon la revendication 1, caractérisé en ce que le matériau cellulaire est obtenu en incorporant à la matière plastique injectée un gaz inerte ou un liquide à bas point d'ébullition.

4. Procédé selon la revendication 1, caractérisé en ce que l'expansion de la matière injectée qui est polymérique résulte de la décomposition, à la température de moulage, d'un agent gonflant ou agent porogène chimique.

5. Procédé selon la revendication 4, caractérisé en ce que la matière plastique est un polyamide et en ce que ledit agent gonflant est choisi dans la famille des azodicarbonamides ou dans celle des tétrazoles et est ajouté à la matière plastique au cours d'une opération préliminaire ou pendant le processus d'injection.

6. Procédé selon l'une quelconque des revendications précédentes, caractérisé en ce que le matériau plastique cellulaire est renforcé par des charges, avantageusement des fibres ou des billes de verre.

7. Procédé selon la revendication 6, caractérisé en ce que la proportion de charge est comprise entre 5 et 95 % en poids de la matière plastique injectée.

8. Procédé selon la revendication 7, caractérisé en ce que la proportion de charge est comprise entre 5 et 25 % en poids de la matière plastique injectée.

9. Procédé selon l'une quelconque des revendications 4 à 8, caractérisé en ce que le moulage de la matière polymérique est conduit de manière que le matériau cellulaire présente une peau de surface (20) dont la profondeur des aspérités est de l'ordre de celle obtenue lors du moulage par injection de matières plastiques compactes, c'est-à-dire de l'ordre de quelques microns.

10. Raccord de tubes ou tuyaux, notamment en caoutchouc, plastomères ou thermoplastiques élastomères ou dispositif analogue comprenant au moins un insert (16; 10; 46; 27; 56, 56', 56") sur lequel sont emmanchés les tubes ou tuyaux (15; 25, 26; 11; 40, 41, 42; 55, 55', 55") et un moulage de matière plastique qui enferme à étanchéité au moins les parties desdits tubes ou tuyaux qui coopèrent avec l'insert, ladite matière plastique étant sous forme d'un matériau cellulaire, expansé, rigide, (19; 35; 12; 50, 60) qui exerce sur lesdits tubes ou tuyaux des efforts de compression assurant l'étanchéité et l'accrochage desdits tubes ou tuyaux sur l'insert.

11. Raccord selon la revendication 10, caractérisé en ce que le matériau cellulaire est renforcé par des charges, avantageusement des fibres ou des billes de verre.

12. Raccord selon la revendication 11, caractérisé en ce que les fibres ou billes de verre représentent entre 5 et 95 % en poids de la matière plastique injectée.

13. Raccord selon la revendication 12, caractérisé en ce que les fibres ou billes de verre représentent entre 5 et 25 % en poids de la matière plastique injectée.

14. Raccord selon l'une quelconque des revendications 10 à 13, caractérisé en ce qu'il présente une peau de surface (20) dont la profondeur des aspérités est de l'ordre de celle obtenue lors du moulage par injection de matières plastiques compactes, c'est-à-dire de l'ordre de quelques microns.

15. Raccord selon l'une quelconque des revendications 10 à 14, caractérisé en ce que la densité du matériau cellulaire est comprise entre environ le tiers de la densité de la matière plastique pure et cette même densité diminuée de quelques pour cent.

## Patentansprüche

1. Verfahren zur Verbindung von Rohren oder Schläuchen, insbesondere aus Kautschuk, aus Plastomeren oder aus thermoplastischen Elastomeren, entsprechend welchem die auf einen Einsatz (10; 16; 27; 46; 56, 56', 56") aufgebrachten Rohre oder Schläuche daran durch Auf- bzw. Umgießen eines Kunststoffes wenigstens gerade von Bereichen, in denen die Rohre oder Schläuche mit dem Einsatz zusammenwirken, dicht gehalten werden, wobei der Kunststoff gegossen wird, derart, um ein zellförmiges Material (12, 19; 35, 50; 60) zu bilden, dessen Ausdehnung auf solche Weise betrieben wird, daß es auf die Rohre oder Schläuche (11, 15; 25, 26; 40, 41, 42; 55, 55', 55") Druckbelastungen ausübt, welche die Verankerung und die Dichtigkeit der Rohre oder Schläuche auf dem Einsatz sicherstellen.

2. Verfahren nach Anspruch 1, dadurch gekennzeichnet, daß die Dichte des zellförmigen Materials, das einen Hartschaum mit geschlossenen Zellen bildet, einschließlich zwischen ungefähr dem Drittel der Dichte des reinen Kunststoffes und dieser gleichen, um einige Prozent verminderten Dichte beträgt.

3. Verfahren nach Anspruch 1, dadurch gekennzeichnet, daß das zellförmige Material erhalten wird, indem dem injiizierten Kunststoff ein Inertgas oder eine Flüssigkeit mit niedrigem Siedepunkt zugesetzt wird.

4. Verfahren nach Anspruch 1, dadurch gekennzeichnet, daß die Ausdehnung des injizierten Materials, das polymerisch ist, aus der Auflösung eines Quellmittels oder chemischen Porenbildners bei der Gießtemperatur resultiert.

5. Verfahren nach Anspruch 4, dadurch gekennzeichnet, daß der Kunststoff ein Polyamid ist und daß das Quellmittel aus der Familie der Azodicarbonamide oder aus derjenigen der Tetrazole ausgewählt wird und der Kunststoff im Verlauf eines vorangehenden Schrittes oder während des Injektionsvorganges zugesetzt wird.

6. Verfahren nach einem der vorhergehenden Ansprüche, dadurch gekennzeichnet, daß der zellförmige Kunststoff durch Chargen vorteilhafterweise aus Glasfasern oder -kugeln verstärkt wird.

7. Verfahren nach Anspruch 6, dadurch gekennzeichnet, daß das Verhältnis der Charge einschließlich zwischen 5 und 95 Gew.-% des injizierten Kunststoffes ist.

8. Verfahren nach Anspruch 7, dadurch gekennzeichnet, daß das Verhältnis der Charge einschließlich zwischen 5 und 25 Gew.-% des injizierten Kunststoffes ist.

9. Verfahren nach einem der Ansprüche 4 bis 8, dadurch gekennzeichnet, daß das Gießen des polymerischen Materials derart durchgeführt wird, daß das zellförmige Material eine Oberflächenhaut (20) bildet, deren Rauhigkeitstiefe von der Größenordnung derjenigen, welche während des Gießens durch Injektion von kompakten Kunststoffen, d.h. von der Größenordnung einiger Mikrometer, ist.

10. Verbindung von Rohren oder Schläuchen, insbesondere aus Kautschuk, Plastomeren oder thermoplastischen Elastomeren, oder analoge Vorrichtung, umfassend wenigstens einen Einsatz (16; 10; 46; 27; 56, 56', 56"), auf welchen die Rohre oder Schläuche (15; 25, 26; 11; 40, 41, 42; 55, 55', 55") aufgebracht sind, und einen Kunststoffguß, welcher wenigstens die Bereiche der Rohre oder Schläuche, die mit dem Einsatz zusammenwirken, dicht umgibt, wobei der Kunststoff von Gestalt eines zellförmigen, ausgedehnten, unelastischen Materials (19; 35; 12; 50, 60) ist, das auf die Rohre oder Schläuche Druckbelastungen ausübt, welche die Dichtigkeit und die Verankerung der Rohre oder Schläuche auf dem Einsatz sicherstellen.

11. Verbindung nach Anspruch 10, dadurch gekennzeichnet, daß das zellförmige Material durch Chargen vorteilhafterweise aus Glasfasern oder -kugeln verstärkt ist.

12. Verbindung nach Anspruch 11, dadurch gekennzeichnet, daß daß die Glasfasern oder -kugeln zwischen 5 und 95 Gew.-% von dem injizierten Kunststoff darstellen.

13. Verbindung nach Anspruch 12, dadurch gekennzeichnet, daß daß die Glasfasern oder -kugeln zwischen 5 und 25 Gew.-% von dem injizierten Kunststoff darstellen.

14. Verbindung nach einem der Ansprüche 10 bis 13, dadurch gekennzeichnet, daß sie eine Oberflächenhaut (20) bildet, deren Rauhigkeitstiefe von der Größenordnung derjenigen, welche während des Gießens durch Injektion von kompakten Kunststoffen, d.h. von der Größenordnung einiger Mikrometer, ist.

15. Verbindung nach einem der Ansprüche 10 bis 14, dadurch gekennzeichnet, daß die Dichte des zellförmigen Materials einschließlich zwischen ungefähr dem Drittel der Dichte des reinen Kunststoffes und dieser gleichen, um einige Prozent verminderten Dichte beträgt.

## Claims

1. A method of connecting tubes or pipes, particularly rubber, plastomer or thermoplastic elastomer-based tubes or pipes, according to which the said tubes or pipes fitted on an insert (10, 16, 27 46, 56, 56', 56") are maintained there in sealing-tight fashion by moulding of a plastics material at least at right-angles to the zones where the said tubes or pipes cooperate with the said insert, the said plastics material being moulded in such a way as to form a cellular material (12, 19; 35; 50; 60) the expansion of which is so conducted that compression stresses on the said tubes or pipes (11, 15, 25, 26, 40, 41, 42, 45, 45', 45") result, ensuring engagement and sealing-tightness of the said tubes or pipes on the insert.

2. A method according to Claim 1, characterised in that the density of the cellular material which forms a rigid foam having closed cells is comprised between approximately one-third the density of the pure plastics material and this same density reduced by a few percent.

3. A method according to Claim 1, characterised in that the cellular material is obtained by incorporating an inert gas or a liquid having a low boiling point into the injected plastics material.

4. A method according to Claim 1, characterised in that expansion of the injected material which is polymeric results from decomposition, at moulding temperature, of a blowing agent or chemical porogenic agent.

5. A method according to Claim 4, characterised in that the plastics material is a polyamide and in that the said blowing agent is chosen from the family of azodicarbonamides or from that of the tetrazoles and is added to the plastics material during the course of a preliminary operation or during the injection process.

6. A method according to any one of the preceding Claims, characterised in that the cellular plastics material is reinforced by fillers, advantageously glass balls or fibres.

7. A method according to Claim 6, characterised in that the proportion of filler is comprised between 5 and 95% by weight of the injected plastics material.

8. A method according to Claim 7, characterised in that the proportion of filler is comprised between 5 and 25% by weight of the injected plastics material.

9. A method according to any one of Claims 4 to 8, characterised in that moulding of the polymeric material is so conducted that the cellular material has a surface (20), the depth of roughness of which is approximately that obtained during the injection moulding of compact plastics materials, that is to say it is around a few microns.

10. A connector for tubes or pipes, particularly of rubber, plastomers or thermoplastics elastomers or a similar device comprising at least one insert (16, 10 46, 27, 56, 56', 56") on which the tubes or pipes (15, 25, 26, 40, 41, 42, 55, 55', 55") are fitted and a moulding of plastics material which encloses in sealing-tight fashion at least those parts of the said tubes which cooperate with the insert, the said plastics material being in the form of a cellular expanded and rigid material (19, 35, 12, 50, 60) which exerts on the said tubes or pipes compression stresses which ensure sealing-tightness and engagement of the said tubes or pipes on the insert.

11. A connector according to Claim 10, characterised in that the cellular material is reinforced by fillers, advantageously glass balls or fibres.

12. A connector according to Claim 11, characterised in that the glass balls or fibres represent between 5 and 95% by weight of the injected plastics material.

13. A connector according to Claim 12, characterised in that the glass balls or fibres represent between 5 and 25% by weight of the injected plastics material.

14. A connector according to any one of Claims 10 to 13, characterised in that it has a surface skin (20) the depth of the roughness thereof being approximately that obtained during injection moulding of compact plastics materials, that is to say of the order of a few microns.

15. A connector according to any one of Claims 10 to 14, characterised in that the density of the cellular material is comprised between approximately one-third the density of the pure plastics material and the same density reduced by a few percent.
